# EUROPÄISCHE PATENTSCHRIFT

(11) **EP 2 609 655 B1**
(45) Veröffentlichungstag und Bekanntmachung des Hinweises auf die Patenterteilung: **12.08.2015**
(21) Anmeldenummer: 11751822.5
(22) Anmeldetag: 25.08.2011
(51) Int. Cl.: H01R 4/18, H01R 43/02, B23K 26/22, H01R 43/048

(54) **VERFAHREN UND VORRICHTUNG ZUM VERBINDEN EINES ELEKTRISCHEN LEITERS MIT EINEM ELEKTRISCHEN KONTAKTTEIL**
METHOD AND DEVICE FOR CONNECTING AN ELECTRICAL CONDUCTOR TO AN ELECTRICAL CONTACT PART
PROCÉDÉ ET DISPOSITIF DE CONNEXION D'UN CONDUCTEUR ÉLECTRIQUE À UN ÉLÉMENT DE CONTACT ÉLECTRIQUE

(30) Priorität: 26.08.2010 DE 102010035424
(43) Veröffentlichungstag der Anmeldung: 03.07.2013
(73) Patentinhaber: Audi AG, 85045 Ingolstadt (DE); Schäfer Werkzeug- und Sondermaschinenbau GmbH, 76669 Bad Schönborn-Langenbrücken (DE)
(72) Erfinder: BAUER, Hans, D-91126 Rednitzhembach (DE); SEITZ, Georg, 85092 Kasing (DE); FINK, Hans-Peter, 85072 Eichstätt (DE); SCHÄFER, Markus, 76669 Bad Schönborn (DE); HAAG, Werner, 68753 Waghäusel (DE)
(74) Vertreter: Herbst, Matthias Heinz
(86) Internationale Anmeldenummer: PCT/EP2011/004264
(87) Internationale Veröffentlichungsnummer: WO 2012/025235

(56) Entgegenhaltungen:
- DE-A1- 3 017 364
- DE-A1- 4 200 492
- JP-A- 2000 231 944
- US-A- 4 913 678
- US-A- 4 966 565

## Beschreibung

Die Erfindung betrifft ein Verfahren zum Verbinden eines elektrischen Leiters mit einem elektrischen Kontaktteil, wobei das Kontaktteil verformbare Schenkel aufweist und die Schenkel mittels eines Biegestempels so verformt werden, dass sie den Leiter mit dem Kontaktteil kraftschlüssig verpressen. Des Weiteren betrifft die Erfindung eine Vorrichtung mit einem Biegestempel zum Verbinden eines elektrischen Leiters mit einem elektrischen Kontaktteil, wobei das Kontaktteil verformbare Schenkel aufweist und der Biegestempel dazu ausgebildet ist, die Schenkel so zu verformen, dass sie den Leiter mit dem Kontaktteil kraftschlüssig verpressen.

Für elektronische und elektrische Komponenten eines Kraftwagens, beispielsweise für dessen Bordnetz, erfolgt die Verbindung von Kontaktteilen und Leitungen in der Regel über eine mechanische, kraftschlüssige Verbindung, die sogenannte Crimpverbindung. Beim Crimpverfahren werden wenigstens zwei Komponenten durch plastische Verformung wenigstens einer Komponente kraftschlüssig miteinander verbunden. Üblicherweise weist ein Kontaktteil Schenkel oder sogenannte Crimpflanken auf, welche unter Krafteinwirkung mit den Litzen eines Kabels durch Quetschen verpresst werden. Hierbei wird in der Regel keine stoffschlüssige Verbindung erzielt. Nach dem Stand der Technik ist es üblich, über einen Verpressungsgrad von ca. 20 % eine wabenförmige Verpressung der Litzen im Kontaktteil zu erzielen. Zudem sollte eine Abstützung der Schenkel gegen ein eventuelles Zurückfedern erreicht werden.

Die Qualitätssicherung solcher Crimpverbindungen erfolgt gewöhnlich durch die sogenannte Crimpkraftüberwachung, bei der man die für das Crimpen bzw. Verbiegen aufzuwendende Kraft in Abhängigkeit von dem Verbiege-Weg misst. Die über den Weg integrierte Kraft ergibt die verrichtete Arbeit, wobei bei der Crimpkraftüberwachung der Arbeitsunterschied zwischen einem gecrimpten Kontaktteil ohne Leitung und einem gecrimpten Kontaktteil mit Leitung als Maß für die Qualität der Crimpverbindung herangezogen wird. Durch einen Arbeitsunterschied von ca. 30 % können fehlende Litzen eines Kabels, eine schlechte Verpressung von Kontaktteil und Leitung und veränderte Crimpparameter (z. B. Crimphöhe) diagnostiziert werden.

Das aus dem Stand der Technik bekannte Crimpverfahren hat zwei wesentliche Nachteile:
Bei sehr geringen Leitungsquerschnitten (kleiner als 0,35 qmm) oder großer Blechdicke des Kontaktteils im deformierten Bereich ist der gemessene Arbeitsunterschied so gering, dass eine gute Überwachung des Crimpverfahrens nicht mehr möglich ist. Beispielsweise lassen sich dann fehlende Litzen eines Kabels nicht mehr identifizieren. Fehlen jedoch einzelne Litzen des Kabels im vercrimpten Bereich, so sinkt der Verpressungsgrad im Crimp und der elektrische Übergangswiderstand zwischen Leiter und Kontaktteil kann bis ins Unendliche ansteigen. Eine elektrische Funktionalität der Verbindung ist damit nicht mehr gegeben.

Ein typischer Werkstoff für das zu deformierende Kontaktteil ist Metall. Da jedes Metall elastische Eigenschaften aufweist, kann bei einer unzureichenden Abstützung der verformten Crimpschenkel ein unterwünschtes Zurückfedern dieser Schenkel auftreten. Hierdurch kann sich der Kontakt zwischen dem verformten Kontaktteil und dem Leiter verschlechtern und der elektrische Widerstand zwischen beiden Komponenten nimmt zu. Die Qualität der Crimpverbindung verschlechtert sich dann.

Aus der DE 103 58 153 A1 ist ein Verbindungsverfahren bekannt, bei dem ein Kabel mit einem Kontaktelement zunächst vercrimpt und anschließend mit diesem in drei einzelnen Schritten laserverschweißt wird. Das Vercrimpen und das Laserschweißen werden in zwei separaten Vorrichtungen und damit auch in getrennten Arbeitsschritten vorgenommen.

Die DE 10 2004 053 126 A1 offenbart eine Vorrichtung, in der ein elektrischer Leiter mit einem Kontaktelement im gleichen Arbeitsvorgang sowohl vercrimpt als auch verschweißt wird. Die Crimplaschen des Kontaktelements werden hierbei mit einem speziellen Crimpwerkzeug verpresst. Der Quetschkontakt wird zwischen der Aderhülle des elektrischen Leiters und den Crimplaschen des Kontaktelements hergestellt, wohingegen das Verschweiörtlich anderer Stelle zwischen einem Leiterende und dem Kontaktelement erfolgt. Beim Schweißen fließt ein elektrischer Strom über Schweißelektroden durch die zu verbindenden Elemente des Leiters und des Kontaktelements.

Aus der DE 198 40 214 C2 ist ein Verfahren zum Pressschweißen bekannt, mittels dem Leitungen zwischen den Laschen eines Leitungshalteteils fixiert werden. Hierzu werden die Leitungen zunächst in das Leistungshalteteil eingebracht und dessen eine Lasche überlappend unter die andere Lasche-unter Zuhilfenahme eines Amboss und eines Crimpstempels gepresst. Anschließend erfolgt das Verschweißen der Laschen.

Die DE 100 07 258 A1 offenbart einen mobilen Kabelverbinder, bei dem ein Drahtbündel in eine abgeschrägte, zylindrische Metallhülse eingeführt wird. An der abgeschrägten Einstecköffnung wird dann das Drahtbündel mit einer Hülsenseite über zwei Elektroden ultraschallverschweißt.

Die DE 103 52 482 A1 beschreibt eine Vorrichtung, mit der sich die Litzen verschiedener Kabel verschweißen lassen. Zudem ermöglicht sie, die elektrische isolierten Bereiche der Kabel zu vercrimpen.

Aus der DE 30 17 364 A1 ist ein Verfahren bekannt, bei dem die Litzen eines Kabels zunächst mit einem Flachstecker vercrimpt werden, indem ein Prägestempel die Metallschenkel des Flachsteckers zusammendrückt. Der Prägestempel dient auch zum Ultraschallverschweißen von Litzen und Flachstecker miteinander.

Auch aus der DE 10 2007 032 584 B4 ist eine Vorrichtung bekannt, mit der Crimp- und Schweißverbindungen hergestellt werden können. Hierbei wird zunächst der Crimp eines Kontaktelements um die Isolierung eines Kabels geschlossen und in einem zweiten Schritt das abisolierte Kabelende mit dem Kontakt verschweißt.

Die US 4 966 565 A beschreibt eine weitere Vorrichtung, bei der zunächst eine Crimpverbindung mittels eines Biegestempels hergestellt und die Verbindung anschließend laserverschweißt wird.

Es ist Aufgabe der vorliegenden Erfindung, ein prozesssicheres und kostengünstiges Verfahren bereitzustellen, mit dem eine sichere Verbindung zwischen einem elektrischen Leiter und einem elektrischen Kontaktteil hergestellt wird. Es ist ferner eine Aufgabe der Erfindung, eine entsprechende Vorrichtung für ein solches Verfahren bereitzustellen.

Die Aufgabe wird für das Verfahren durch den Gegenstand des Patentanspruchs 1 gelöst. Die Aufgabe für die Vorrichtung wird durch den Gegenstand des Patentanspruchs 8 gelöst.

Das erfindungsgemäße Verfahren bedient sich eines Biegestempels. Der Biegestempel ist so ausgebildet, dass sich mit ihm verformbare Schenkel eines Kontaktteils so verformen lassen, dass sie einen Leiter mit dem Kontaktteil kraftschlüssig verpressen. Ein solcher Biegestempel wird auch als Crimper, der Vorgang des Verpressens auch als Crimpverfahren oder Crimpprozess bezeichnet. Der Biegestempel ist insbesondere so ausgebildet, dass er die Schenkel des Kontaktteils in vorgegebener und kontrollierter Art und Weise verformt. Das Verfahren ist insbesondere auf Kontaktteile anwendbar, welche aus Metall gebildet sind und welche seitliche Flankenbereiche in Form von Metalllappen bzw. -schenkeln aufweisen, die umgebogen werden können. Die Schenkel eines Kontaktteils können paarweise einander gegenüber angeordnet sein. Befindet sich zwischen den Schenkeln ein Leiter, z. B. in Form von Litzen eines Kabels, kann dieser durch Verformen der Schenkel zwischen ihnen eingepresst werden.

Der Biegestempel ist insbesondere so ausgebildet, dass dieses Quetschen oder Pressen besonders effektiv durchgeführt werden kann. Er wird insbesondere eine Ausnehmung für das Kontaktteil und den Leiter aufweisen, wobei eine Krafteinwirkung zwischen Kontaktteil und Biegestempel dazu führt, dass das Kontaktteil durch den mechanischen Widerstand eines die Ausnehmung begrenzenden Wandbereichs des Biegestempels verformt wird. Wenigstens eine mit dem Kontaktteil bzw. dessen Schenkeln in mechanischem Kontakt stehende Seite bzw. Fläche des Biegestempels ist vorzugsweise so ausgebildet, dass sich durch die verformende Krafteinwirkung eine spezifische Endform der deformierten Schenkel ergibt. Beispielsweise kann eine Wandung des Biegestempels hierfür passend geformt sein, z. B. teilkreisförmig geformt sein.

Das erfindungsgemäße Verfahren erlaubt eine besonders feste, sichere und dauerhafte Verbindung zwischen dem elektrischen Leiter und dem elektrischen Kontaktteil herzustellen. Durch die zusätzliche stoffschlüssige Verbindung wird vermieden, dass die kraftschlüssige Verbindung beispielsweise durch ein elastisches Zurückfedern der Schenkel des Kontaktteils geschwächt wird. Das Verfahren stellt nämlich sicher, dass zumindest die Schenkel des Kontaktteils stoffschlüssig miteinander verbunden sind. Die stoffschlüssige Verbindung wird insbesondere dadurch hergestellt, dass das Material der Schenkel aufgeschmolzen wird. Wenn das aufgeschmolzene Material wieder erstarrt, führt dies zu einer besonders innigen materiellen Verbindung der aufgeschmolzenen Bereiche. Vormals unabhängige Schenkel können so z. B. zu einem einzigen Metallteil verschmolzen werden. Bei dem Vorgang des stoffschlüssigen Verbindens handelt es sich also insbesondere um einen Schweißprozess. Darüber hinaus kann vorgesehen sein, dass auch das Kontaktteil mit dem Leiter stoffschlüssig verbunden wird. Hierzu kann z. B. die Leistung oder Zeitdauer der Einwirkung angepasst werden, die den Stoffschluss bewirkt. Es kann insbesondere eine stoffliche Verbindung zwischen den Schenkeln des Kontaktteils und den Litzen eines Leitungskabels hergestellt werden. Hierdurch wird ein besonders intensiver Kontakt hergestellt, und der elektrische Widerstand kann gering gehalten werden.

Das Verfahren hat den Vorteil, dass auch dünne Leitungen mit dem Kontaktteil sicher verbunden werden können. Bei geringen Leitungsquerschnitten der ist ein ausschließlich kraftschlüssiges Verpressen mit dem Kontaktteil meist nicht ausreichend. Die zusätzliche stoffschlüssige Verbindung erlaubt hier eine qualitative Verbesserung des elektrischen Kontakts. Ebenso lassen sich dünne Kabel mit einem vergleichsweise großen Kontaktteil sicher verbinden. Folglich wird auch der Einsatz dünner Leitungen möglich, was insgesamt zur Gewichtsreduzierung der elektrischen Komponenten beiträgt. Es können auch Verbindungen zwischen solchen Kontaktteilen und Leitungen hergestellt werden, bei denen nach dem Stand der Technik das Verhältnis von Leitungsquerschnitt zu Kontaktteilgröße ungünstig ist.

Gemäß der Erfindung findet ein Biegestempel Anwendung, welcher zumindest eine Öffnung aufweist. Durch die Öffnung kann auf das Kontaktteil so eingewirkt werden, dass wenigstens die Schenkel des Kontaktteils stoffschlüssig miteinander verbunden werden. Die Öffnung bildet hierbei einen Zugang zu der Ausnehmung des Biegestempels, in der das Verpressen stattfindet. Damit kann während des Verpressens über die Öffnung auf das Kontaktteil Einfluss genommen werden. Die Öffnung erlaubt z. B. einen Lichtbogen, Ultraschall oder elektrischen Strom auf das Kontaktteil zu applizieren, um eine stoffschlüssige Verbindung herzustellen. Insbesondere ist die Öffnung jedoch geeignet als eine Einstrahlöffnung für einen Laserstrahl eines Schweißlasers. Durch die Öffnung wird ein einfacher Zugang zur Ausnehmung des Biegestempels geschaffen, so dass unkompliziert Einfluss auf das Kontaktteil genommen werden kann. Die Öffnung erlaubt, dass an dem Kontaktteil eine stoffschlüssige Verbindung hergestellt werden kann, während es noch vom Biegestempel umschlossen ist. Die Eigenschaft des Biegestempels, eine kraftschlüssige Verbindung herzustellen, wird dabei nicht nachteilig beeinflusst.

Vorzugsweise wird über Ausnehmungen bzw. Aussparungen an den Kanten der Schenkel des Kontaktteils dergestalt eingewirkt, dass eine stoffschlüssige Verbindung zwischen Komponenten des Leiters, insbesondere zwischen den Litzen eines Kabels, hergestellt wird. Zusätzlich oder alternativ wird bevorzugt dergestalt eingewirkt, dass auch eine stoffschlüssige Verbindung zwischen dem Leiter und dem Kontaktteil hergestellt wird, und zwar insbesondere zwischen einzelnen Litzen eines Kabels und den Schenkeln des Kontaktteils. Hierzu sind Ausnehmungen an den jeweiligen Endbereichen bzw. Außenkanten der Schenkel vorgesehen, welche während des kraftschlüssigen Verpressens einander gegenüber zu liegen kommen. Nach dem Einbiegen der Schenkel werden beispielsweise einzelne Kantenbereiche einander berühren, wohingegen an den Stellen mit den Ausnehmungen Öffnungen gebildet werden, durch die auf den Bereich eingewirkt werden kann, der von den Schenkeln eingeschlossen wird. Es kann dann z. B. durch diese Öffnungen ein Laserstrahl auf die verpressten Litzen eines Kabels eingestrahlt werden, der diese miteinander und/oder mit den Schenkeln verschweißt. Die Ausnehmungen, die am Rand der Crimpflanken verlaufen, können eine beliebige Geometrie aufweisen. Es können abwechselnd Bereiche existieren, in denen sich die Schenkel direkt berühren bzw. einen Zwischenraum zum Leiter freigeben. Pro Schenkel können eine oder mehrere Aussparungen vorgesehen sein.

Besonders bevorzugt ist es, wenn die Aussparungen nach dem Vercrimpen der Schenkel Öffnungen bilden, deren Fläche kleiner ist als der Applikationsbereich der den Stoffschluss verursachenden Einwirkung. Beispielsweise ist eine solche Öffnung kleiner als der Durchmesser eines einwirkenden Schweißlaserstrahls. Dann erfolgt die Einwirkung sowohl direkt auf die Schenkel als auch direkt auf den Leiter.

Diese Ausführungsform erlaubt die Herstellung einer besonders innigen stoffschlüssigen Verbindung. Es ist sichergestellt, dass z. B. nicht nur die Crimpschenkel miteinander verschweißt werden, sondern auch die Litzen eines Kabels untereinander und gegebenenfalls zusätzlich mit zumindest einem der Schenkel des Kontaktelements stoffschlüssig verbunden werden. Auch die Zeitdauer für die Einwirkung, die den Stoffschluss verursacht, lässt sich reduzieren. Beispielsweise muss ein Laserstrahl nicht erst die Schenkel soweit aufschmelzen, dass seine Wärmeeinwirkung auch bis zu den Litzen vordringt. Es kann dann z. B. auch mit geringeren Laserintensitäten gearbeitet werden.

Vorzugsweise wird die stoffschlüssige Verbindung durch das Einstrahlen eines Laserstrahls bewirkt. Der Laserstrahl wird hierbei z. B. durch die Öffnung im Biegestempel auf das Kontaktteil gestrahlt. Die Öffnung stellt dann eine Einstrahlöffnung für den Laserstrahl dar. Die auf die Schenkel des Kontaktteils treffende Laserstrahlung bewirkt, dass zumindest die Schenkel stoffschlüssig miteinander verbunden werden. Bei der Quelle für den Laserstrahl kann es sich um einen solchen (Schweiß)Laser handeln, der besonders intensive Laserstrahlung emittiert. Beim Auftreffen auf die Schenkel kann genügend Energie deponiert werden, um diese miteinander zu verschweißen.

Laserschweißen ist eine etablierte und effektive Methode, um einen stoffschlüssigen Kontakt herzustellen. Bei hoher Laserstrahlung reichen bereits kurze Schweißzeiten aus, um eine optimale Verbindung im Schweißgut zu bewirken. Eine Laserquelle lässt sich zudem sehr flexibel und variabel positionieren, da die von ihr ausgesandte Laserstrahlung z. B. über Spiegel, Prismen, Glasfasern oder andere optische Komponenten sehr einfach geführt werden kann.

Wird die stoffschlüssige Verbindung von einem Laserstrahl bewirkt, ist es weiterhin bevorzugt, dass auch Größen gemessen werden, welche das Einwirken des Laserstrahls auf das Kontaktteil und/oder den Leiter charakterisieren. Diese Größen liefern dann ein Maß für die Qualität der stoffschlüssigen Verbindung. Die Überwachung der Laserschweißparameter erlaubt, auf die Qualität der hergestellten Verbindung zu schließen. Dann kann z. B. auf eine konventionelle Crimpkraftüberwachung verzichtet oder diese durch die Kontrolle der Schweißparameter ergänzt werden. Wie bereits dargestellt, versagt die Crimpkraftüberwachung häufig dann, wenn Leitungen mit geringen Querschnitten und/oder Kontaktteile mit großen Blechdicken miteinander verbunden werden. Eine Überwachung der Schweißparameter erlaubt festzustellen, ob eine qualitativ hochwertige Schweißverbindung erzielt wurde. Aufwändige technische Zusatzmaßnahmen, um die Qualität der Crimpverbindung sicherzustellen, sind nicht mehr notwendig. Durch die Messung, Auswertung und Überwachung von Laserschweißparametern wird die erreichte Verbindung ausreichend qualitätsgesichert.

Vorzugsweise handelt es sich bei der gemessenen Größe um eine Schweißdauer. Alternativ oder zusätzlich kann auch eine eingestrahlte Intensität des Laserstrahls (22) gemessen werden. Alternativ oder zusätzlich kann auch diejenige Wellenlänge Strahlung mit der höchsten Strahlungsleistung, die der Bereich (30) aussendet, auf welchen der Laserstrahl (22) einwirkt, gemessen werden. Im letztgenannten Fall kann beispielsweise eine Bestimmung der Temperatur nach dem wienschen Verschiebungsgesetz erfolgen, was wiederum die Qualitätskontrolle des Schweißvorgangs verbessert.

Weiterhin ist es bevorzugt, dass das stoffschlüssige Verbinden erfolgt, nachdem über den Biegetempel eine vorgegebene Sollverformung der Schenkel erzielt wurde. Um eine ausreichende kraftschlüssige Verpressung zu erreichen, ist es notwendig, dass die Schenkel durch den Biegetempel angemessen verformt sind. Eine solche Verbiegung kann dann als Sollverformung festgelegt werden. Insbesondere wird die Sollverformung der maximalen Verformung entsprechen, die im jeweiligen Crimpprozess erreicht wird. Die Sollverformung kann auch darin bestehen, dass einander gegenüber liegende Schenkel so verbogen sind, dass sie miteinander überlappen und/oder sich gegenseitig berühren.

Bei dieser Ausführungsform ist sichergestellt, dass einerseits der Kraftschluss zwischen Kontaktteil und Leiter optimal ist, und andererseits bestmögliche Voraussetzungen für eine effektive stoffliche Verbindung gegeben sind. Berühren sich z. B. die Schenkel, muss gegebenenfalls nur wenig Material aufgeschmolzen werden, um eine stoffschlüssige Verbindung zu erreichen. Durch eine ausgeprägte Sollverformung kann zudem erreicht werden, dass das Schenkelmaterial nur noch geringe elastische Eigenschaften aufweist. Eine Beeinträchtigung der Qualität der Crimpverbindung durch ein Auffedern der Schenkel wird dann vermieden. Der Schritt des stoffschlüssigen Verbindens erhöht die Taktzeit für den eigentlichen Crimpprozess nicht oder nur unwesentlich. Das Verfahren ist damit annähernd taktzeitneutral.

Die Dimensionen des Kontaktteils lassen sich durch seine Längs- und seine Quererstreckung charakterisieren. Es ist bevorzugt, dass das stoffschlüssige Verbinden zumindest in einem bezüglich der Längserstreckung mittigen Teilbereich erfolgt. Insbesondere handelt es sich bei dem mittigen Teilbereich um einen bezüglich der Längserstreckung der Schenkel des Kontaktteils mittig angeordneten Bereich.

Typischerweise liegen in einem solchen Mittelbereich die Litzen eines Kabels besonders dicht zwischen den Schenkeln. Deshalb werden die auftretenden Verformungskräfte dort besonders hoch sein und die Schenkel bevorzugt elastisch zurückweichen. Eine zusätzliche stofflichen Verbindung hemmt dann das Zurückfedern der Schenkel an dieser Stelle besonders effektiv. Vordere und hintere Auslaufbereiche der verformten Kontaktteilregion sind häufig trichterförmig ausgebildet, so dass eine stoffschlüssige Verbindung in diesen Bereichen geringere Wirkung zeigt.
Des Weiteren betrifft die Erfindung eine Vorrichtung zum Verbinden eines elektrischen Leiters mit einem elektrischen Kontaktteil. Die erfindungsgemäße Vorrichtung umfasst ein Laserschweißgerät sowie einen Biegestempel. Der Biegestempel ist dazu ausgebildet, die Schenkel des elektrischen Kontaktteils so zu verformen, dass sie den Leiter mit dem Kontaktteil kraftschlüssig verpressen. Das Laserschweißgerät ist dazu ausgelegt, auf das Kontaktteil so einzuwirken, dass wenigstens die Schenkel stoffschlüssig miteinander verbunden werden. Dies erfolgt mittels eines Schweißlaserstrahls, der vom Laserschweißgerät emittiert wird.

Gemäß der Erfindung weist der Biegestempel zudem eine Biegeseite auf, an der die Schenkel eines Kontaktteils mit dem Biegestempel in Wirkkontakt treten können. An der Biegeseite können die auftretenden Drücke zwischen Biegestempel und Kontaktteil maximal sein. Die Biegeseite besitzt typischerweise eine charakteristische Oberflächenform bzw. Topographie, um die Schenkel eines Kontaktteils unter Krafteinwirkung in gezielter Art und Weise zu verformen. Weiterhin besitzt der Biegestempel eine Öffnung, welche eine Durchtrittsöffnung für einen Schweißlaserstrahl ist, der von einem Laserschweißgerät ausgesandt wird. Durch diese Öffnung kann der Schweißlaserstrahl in eine Ausnehmung eingestrahlt werden, die von der Biegeseite begrenzt wird. Vorzugsweise wird sich dabei die Öffnung in der Biegeseite selbst befinden. Dann erlaubt die Biegeseite nicht nur die gezielte Verformung der Schenkel eines Kontaktteils, sondern auch die Einkopplung des Laserstrahls, der die Schenkel verschweißt.

Ferner weist die Vorrichtung auch noch bevorzugt eine Messeinrichtung auf, welche dazu ausgelegt ist, Größen zu messen, die den Schweißlaserstrahl charakterisieren. Über eine solche Messeinrichtung ist dann eine Qualitätssicherung des Schweißprozesses und der mit ihm erzielten stofflichen Verbindung sichergestellt.

In einer weiteren bevorzugten Ausführungsform umfasst die Vorrichtung auch eine Positioniereinrichtung, welche in der Lage ist, das Laserschweißgerät und/oder das Kontaktteil in geeigneter Art und Weise zu positionieren. Insbesondere lässt sich die relative Anordnung von Laserschweißgerät und Kontaktteil zueinander steuern. Wenn die Schenkel des Kontaktteils entlang ihrer Kanten Ausnehmungen aufweisen, so lässt sich die Lage des Kontaktteils über die Positioniereinrichtung so einstellen, dass wenigstens eine Ausnehmung im Schweißlaserstrahl zu liegen kommt. Die Positioniereinrichtung erlaubt also, mit dem Laserstrahl quasi auf die Ausnehmungen zu zielen. Nach dem Verpressen der Crimpschenkel sind über die Ausnehmungen Durchgangsöffnungen zum Leiter freigegeben. Dann kann über den Laserstrahl direkt auf den Leiter eingewirkt werden und es können z. B. dessen Litzen miteinander verschweißt werden.

Die in Bezug auf das erfindungsgemäße Verfahren vorgestellten bevorzugten Ausführungsformen und deren Vorteile gelten entsprechend für die erfindungsgemäße Vorrichtung.

Weitere Merkmale der Erfindung ergeben sich aus den Ansprüchen, den Figuren und der Figurenbeschreibung. Die vorstehend in der Beschreibung genannten Merkmale und Merkmalskombinationen wie auch die in der Figurenbeschreibung genannten Merkmale und Merkmalskombinationen und/oder die in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Anhand von Ausführungsbeispielen wird die Erfindung im Folgenden näher erläutert. Es zeigen:
- Fig. 1A-1D: schematische Schnittdarstellungen einer Vorrichtung zum Verbinden eines elektrischen Leiters mit einem elektrischen Kontaktteil zu vier verschiedenen Zeitpunkten während des Ablaufs des erfindungsgemäßen Verbindungsverfahrens;
- Fig. 2: eine schematische Schnittdarstellung durch ein elektrisches Kontaktteil mit verformten Schenkeln und kraftschlüssig verpressten Litzen eines Kabels;
- Fig. 3: eine perspektivische Darstellung eines Kontaktteils, dessen Schenkel mit den Litzen eines Kabels kraftschlüssig verpresst sind, zu einem Zeitpunkt des Laserschweißens;
- Fig. 4A: eine perspektivische Darstellung eines Kontaktteils, dessen Schenkel mit den Litzen eines Kabels kraftschlüssig verpresst sind, wobei die Schenkel mehrere Aussparungen als Durchtrittsöffnungen für einen Laserstrahl aufweisen;
- Fig. 4B: eine schematische Aufsicht auf einen Abschnitt des Kontaktteils der Fig. 4A, wobei die Schenkel im ausgeklappten Zustand gezeigt sind;
- Fig. 5A: eine perspektivische Darstellung eines Kontaktteils, dessen Schenkel mit den Litzen eines Kabels kraftschlüssig verpresst sind, wobei die Schenkel jeweils eine Aussparung aufweisen, die zusammen eine Durchtrittsöffnung für einen Laserstrahl bilden; und
- Fig. 5B: eine schematische Aufsicht auf einen Abschnitt des Kontaktteils der Fig. 5A, wobei die Schenkel im ausgeklappten Zustand gezeigt sind.

In den Figuren werden gleiche oder funktionsgleiche Elemente mit den gleichen Bezugszeichen versehen.

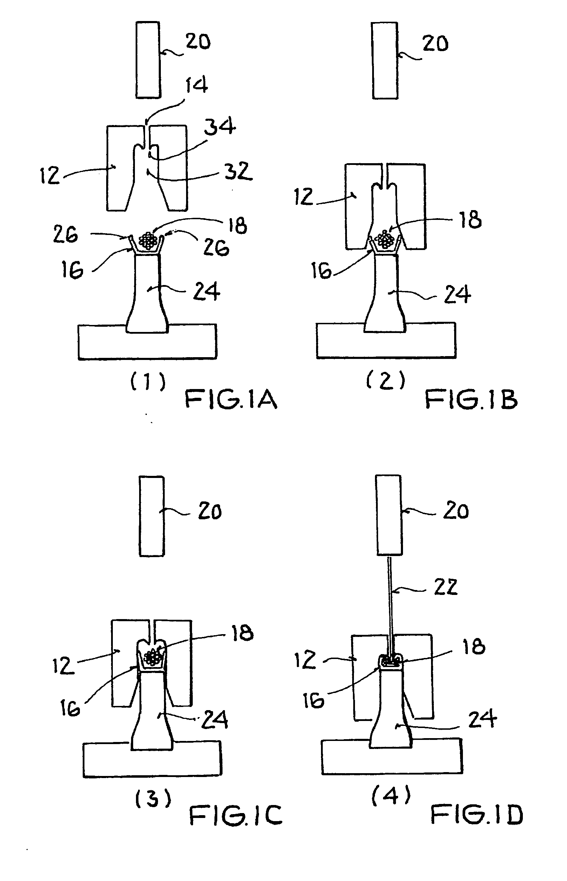

Die Fig. 1A-1D zeigen eine Vorrichtung 10 zum Verbinden eines elektrischen Kontaktteils 16 mit einem elektrischen Leiter 18 in vier verschiedenen, für das Verbindungsverfahren charakteristischen Positionen (1) bis (4). Die Vorrichtung 10 umfasst insbesondere einen Stößel 24 auf dem das Kontaktteil 16 aufliegt. Das Kontaktteil 16 ist im Ausführungsbeispiel aus Metall gefertigt und weist paarweise einander gegenüberliegende Schenkel 26 auf. Der Leiter 18 ist zwischen den Schenkeln 26 lose eingebracht. Bei dem Leiter 18 handelt es sich im Ausführungsbeispiel um ein Kabel mit einer Vielzahl von Einzelleitern bzw. Litzen 28. Insbesondere ist zum Zeitpunkt (1) (Fig. 1A) noch keine dauerhafte Verbindung zwischen dem Kontaktteil 16 und den Litzen 28 des Leiters 18 hergestellt. Im Ausführungsbeispiel sind die Litzen 28 aus einem elektrisch leitenden Metall gefertigt. Die Vorrichtung 10 umfasst schließlich auch einen Biegestempel 12, welcher gegenstückig zum Stößel 24 ausgebildet ist. Dies ermöglicht, dass zumindest ein Teilbereich des Stößels 24 in eine Ausnehmung 32 des Biegestempels 12 eingeführt werden kann. Stößel 24 und Biegestempel 12 wirken dabei als Stück und Gegenstück passgenau zusammen. Die Ausnehmung 32 ist als Längsschlitz ausgebildet, dessen Unterseite 34 eine Öffnung 14 aufweist. Der Biegestempel 12 wird auch als Crimper bezeichnet und ist aus Metall gefertigt. Es handelt sich bei ihm um ein Verschleißteil, welches nach häufigem Wiederholen des erfindungsgemäßen Verbindungsverfahrens üblicherweise ausgetauscht werden muss. Der Biegestempel 12 ist damit ein austauschbares Crimpwerkzeug der Vorrichtung 10.

Die Vorrichtung 10 umfasst ferner einen Laser 20, der einen Laserstrahl 22 aussenden kann. Der Laser 20 dient als Schweißlaser, dessen hochintensive Laserstrahlung dazu geeignet ist, Metall aufzuschmelzen. Der Laser 20 ist so angeordnet, dass der von ihm emittierte Laserstrahl 22 durch die Öffnung 14 des Biegestempels 12 in die Ausnehmung 32 eingestrahlt wird. Die räumliche Anordnung des Lasers 20 gegenüber dem Biegestempel 12 ist im Ausführungsbeispiel der Fig. 1A-1D nur sehr schematisch zu verstehen. Der Laser 20 kann gegenüber dem Biegestempel 12 beliebig angeordnet sein, solange sein Laserstrahl 22 in geeigneter Weise durch die Öffnung 14 des Biegestempels 12 geführt werden kann. Dies lässt sich insbesondere auch über nicht dargestellte strahlumlenkende Elemente, wie z. B. Spiegel, Prismen oder andere optische Elemente erreichen. Auch andere Möglichkeiten der Einkopplung des Laserstrahls 22 sind denkbar. So kann der Laserstrahl 22 durch die Öffnung 14 mittels eines Lichtleiters, z. B. einer Glasfaser, in die Ausnehmung 32 geführt werden. Der Lichtleiter verläuft dann z. B. durch einen Teilbereich der Öffnung 14 oder durch die gesamte Öffnung 14 bis an einen Wandbereich der Ausnehmung 32 oder sogar bis in die Ausnehmung 32 hinein. Der Biegestempel 12 kann auch mehrere Öffnungen aufweisen, wobei jeder der Öffnungen ein separater Laserstrahl 22 zugewiesen sein kann. Es kann auch vorgesehen sein, dass der Laserstrahl 22 sukzessive durch verschiedene Öffnungen eingestrahlt wird. Der Laserstrahl 22 kann auch durch eine Auswahl an Öffnungen unter einer Vielzahl von Öffnungen eingestrahlt werden. Insbesondere kann ein einziger Laserstrahl 22 auch über mehrere Lichtleiter aufgespalten werden, wobei die einzelnen Lichtleiter dann über die mehreren Öffnungen in die Ausnehmung 32 hinein verlaufen.

Die Vorrichtung 10 wird auch als Applikator bezeichnet. Es kann jedoch alternativ auch vorgesehen sein, dass der Applikator, welcher dann die Kernbauteile Biegestempel 12 und Stößel 24 umfasst, räumlich von dem Laser 20 getrennt ist. Insbesondere können dann ein so ausgebildeter Applikator und der separate Laser 20 zwei individuelle Geräte bilden, deren Kombination dann zu der Vorrichtung 10 führt.

Um das Kontaktteil 16 mit dem Leiter 18 zu verbinden, bewegen sich Stößel 24 und Biegestempel 12 so aufeinander zu, dass der Stößel 24 passgenau in die Ausnehmung 32 vordringt. Der Stößel 24 stützt das auf ihm aufliegende Kontaktteil 16 mit dem Leiter 18. Der Biegestempel 12 wird dann senkrecht auf den Stößel 24 zubewegt (siehe Zeitpunkt (2) in Fig. 1 B).

Zu einem Zeitpunkt (3) (Fig. 1 C) ist der Stößel 24 soweit in die Ausnehmung 32 vorgedrungen, dass die Schenkel 26 des Kontaktteils 16 die untere Seite 34 des Biegestempels 12 berühren. Einem weiteren Aufeinanderzubewegen von Stößel 24 und Biegestempel 12 wird dann durch die Schenkel 26 eine Kraft entgegengesetzt.

Wird nun auf den Stößel 24 und/oder den Biegestempel 12 weiter Kraft ausgeübt, kommt es zu einer Verformung der Schenkel 26. Je nach Dauer der Krafteinwirkung sowie des Umfangs der Verformung ist die sich ergebende Deformation der Schenkel 26 plastischer Natur. Durch eine geeignete Form der Seite 34 wird erreicht, dass sich die Schenkel in kontrollierter und vordefinierter Art und Weise verformen. Im Ausführungsbeispiel weist die Seite 34 zwei teilkreisförmige Rundungen auf, denen die Schenkel 26 während des Verformens folgen, so dass sie sich quasi einrollen.

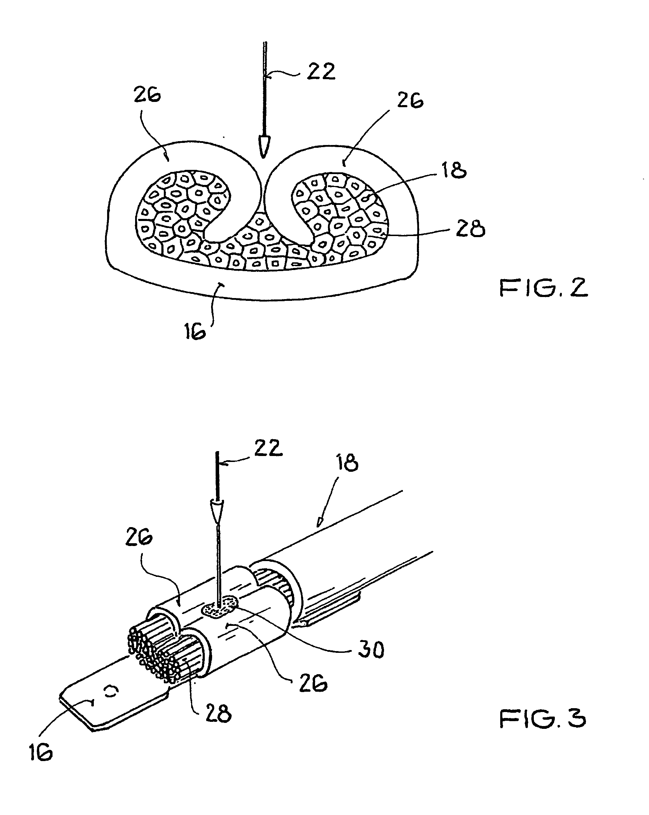

In Fig. 2 ist ein Kontaktteil 16 mit verformten Schenkeln 26 dargestellt. Die auf gegenüber liegenden Seiten des Kontaktteils 16 ausgebildeten Schenkel 26 sind durch die definierte Krafteinwirkung spiralförmig eingebogen und treffen mittig aufeinander. Die vormals lose in dem Kontaktteil 16 liegenden Litzen 28 des Leiters 18 sind mit dem Kontaktteil 16 kraftschlüssig verpresst. Es handelt sich also gewissermaßen um einen Presskontakt, der durch gezieltes Quetschen der Schenkel 26 hergestellt wurde. Durch das innige Aneinanderlagern der Litzen 28 untereinander und mit dem Kontaktteil 16 ist auch ein guter elektrischer Kontakt zwischen allen so verpressten Elementen hergestellt.

Das rein kraftschlüssige Verpressen wird auch als Crimpen oder Bördeln bezeichnet. Die Schenkel 26 können teilweise elastisch in Richtung ihrer Ausgangslage zurückfedern, so dass die kraftschlüssige Verbindung mit den Litzen 28 gelöst wird. Hierdurch kann auch ein möglicherweise gegebener elektrischer Kontakt zwischen dem Leiter 18 und dem Kontaktteil 16 verschlechtert oder sogar unterbrochen werden.

Deshalb ist ein weiterer Schritt vorgesehen, in dem eine zusätzliche stoffschlüssige Verbindung zumindest der Schenkel 26 untereinander hergestellt wird (siehe Zeitpunkt (4) in Fig. 1D). Sobald der Stößel 24 am tiefsten in die Ausnehmung 32 des Biegestempels 12 vorgedrungen ist, wird durch die Öffnung 14 ein Laserstrahl 22 auf die verformten Schenkel 26 appliziert. Dieser Zeitpunkt wird auch als unterer Totpunkt bezeichnet. Dann sind die Schenkel 26 maximal verformt und um die Litzen 28 herum bestmöglich geschlossen. Da im unteren Totpunkt noch Kraft auf das Kontaktteil 16 ausgeübt wird, können die Schenkel 26 noch nicht elastisch zurückfedern. Der Laserstrahl 22 trifft auf die Schenkel 26, erhitzt diese und schmilzt sie auf. Hierdurch werden die Schenkel 26 miteinander verschweißt und so stoffschlüssig verbunden. Im Ausführungsbeispiel ist die Intensität und Applikationsdauer der Laserstrahlung so gewählt, dass nicht nur die Schenkel 26 miteinander verschweißt werden, sondern auch das Kontaktteil 16 mit den Litzen 28 und einige der Litzen 28 untereinander. Hierdurch wird eine besonders innige, dauerhafte, feste und sichere mechanische Verbindung geschaffen. Die gute materielle Verbindung führt dann auch zu einer optimalen elektrischen Verbindung, d.h. einer Verbindung mit geringen elektrischen Widerständen.

Der Vorgang des Crimpens, d.h. des Verbiegens der Schenkel 26, läuft über eine gewisse Zeitdauer ab: Ein bereits vercrimptes Kontaktteil 16 wird aus der Vorrichtung 10 entnommen und wiederum neu zu verbindende Elemente werden eingeführt. Die Zeitdauer für einen Zyklus des Crimpprozesses wird auch von der Zeitspanne beeinflusst, die benötigt wird, um Leiter 18 und Kontaktteil 16 miteinander zu verpressen. Der Vorgang des Laserschweißens erhöht die Zykluszeit des Crimpprozesses dabei nicht oder nur unwesentlich. Das kombinierte Crimp-/Schweißverfahren ist damit gegenüber dem reinen Crimpverfahren taktzeitneutral. Da pro Minute beispielsweise etwa mehrere 100 bis 1000 Crimpverbindungen hergestellt werden können, ist dies ein erheblicher Vorteil. Obwohl die Crimpverbindung durch das zusätzliche Schweißen verbessert wird, wird die benötigte Zeitdauer für das gesamte Verfahren nicht oder nur unwesentlich verlängert.

Die Qualitätssicherung des kombinierten Crimp- und Schweißverfahrens erfolgt im Ausführungsbeispiel durch die Überwachung der Laserschweißparameter nach dem Stand der Technik. Die Qualität der kraftschlüssig hergestellten Crimpverbindung wird üblicherweise dadurch sichergestellt, dass die während des Verformens auftretenden Kräfte überwacht werden. Im hier dargestellten Ausführungsbeispiel wird eine solche Crimpkraftüberwachung durch die zusätzliche Überwachung der Laserschweißparameter ergänzt. Dieser zusätzliche qualitätssichernde Schritt garantiert dann, dass tatsächlich eine ausreichende Verbindung zwischen Kontaktteil 16 und Leiter 18 hergestellt ist. Eine ausschließliche Crimpkraftüberwachung wäre unter bestimmten Bedingungen (z. B. ungünstige Größenverhältnisse von Leiter 18 und Kontaktteil 16) hierzu nicht in der Lage.

Das Kontaktteil 16 weist eine gewisse Längs- und eine bestimmte Quererstreckung auf. Aus Fig. 2 kann lediglich die Quererstreckung in Links-, Rechtsausdehnung entnommen werden. Die paarweise gegenüber angeordneten Schenkel 26 sind symmetrisch zueinander verformt und berühren einander in einem bezüglich der Quererstreckung mittigen Bereich. Wie schematisch durch die Einstrahlposition und -richtung des Laserstrahls 22 in der Fig. 2 angedeutet, erfolgt die stoffschlüssige Verbindung der Schenkel 26 genau in diesem Berührbereich. Dann ist eine besonders gute Verbindung sichergestellt und ein elastisches Zurückfedern der Schenkel 26 kann bestmöglich verhindert werden.

Im Ausführungsbeispiel der Fig. 3 ist der Schweißbereich 30 nicht nur mittig bezüglich der Querersteckung des Kontaktteils 16 angeordnet, sondern auch mittig bezüglich dessen Längserstreckung. Hierdurch lässt sich eine sehr kontrollierte und stabile stoffschlüssige Verbindung erreichen.

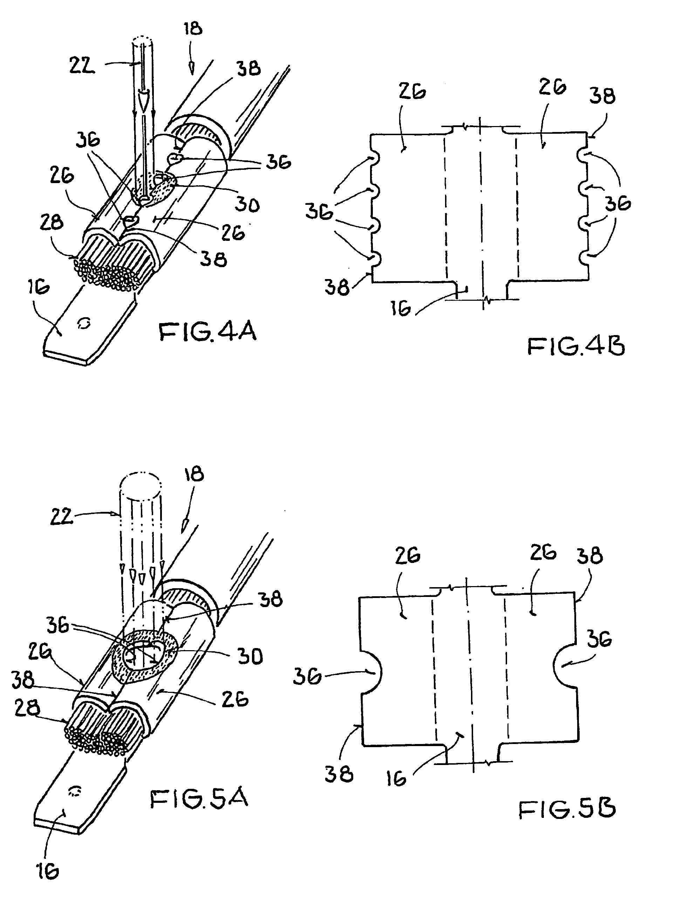

In den Ausführungsbeispielen der Fig. 4A bis 5B sind speziell ausgeführte Kontaktteile 16 dargestellt, welche eine einfache und dabei sehr effektive Kontrolle der Art der stoffschlüssigen Verbindung erlauben. Die Kanten 38 der einander gegenüberliegenden Schenkel 26 des Kontaktteils 16 sind speziell geformt. Dies geht besonders aus den Darstellungen der Fig. 4B und 5B hervor, in denen der die Schenkel 26 umfassende Abschnitt des Kontaktteils 16 mit ausgefalteten bzw. unvercrimpten Schenkeln 26 in Aufsicht gezeigt ist. Die Schenkel 26 weisen jeweils eine (Fig. 5B) oder mehrere (Fig. 4B) Aussparungen 36 auf, welche entlang der ansonsten geradlinigen Kanten 38 der Schenkel 26 ausgebildet sind. Während des kraftschlüssigen Verpressens kommen die Aussparungen 36 der jeweils gegenüberliegenden Schenkel 26 nebeneinander zu liegen und bilden Öffnungen, durch die ein Laserstrahl 22 direkt auf die zwischen den Schenkeln 26 liegenden Litzen 28 appliziert werden kann. Gemäß Fig. 5A kann der Laserstrahl 22 gezielt durch die Öffnung, welche durch die Aussparungen 36 gebildet ist, auf die Litzen 28 eingestrahlt werden und diese stoffschlüssig miteinander verbinden. Dies erfolgt ergänzend zur stoffschlüssigen Verbindung der Schenkel 26, da die Öffnung eine Fläche aufweist, die geringer als die Querschnittsfläche des Laserstrahls 22 ist. Gemäß Fig. 4A können auch mehrere Aussparungen 36 ausgebildet sein, so dass in einem Bereich 30 einerseits die Schenkel 26 verschweißt werden und andererseits der Laserstrahl 22 über die Aussparungen 36 bis auf die Litzen 28 vordringt, um diese stoffschlüssig miteinander zu verbinden. Die Aussparungen 36 sind im Ausführungsbeispiel teilkreisförmig.

## Patentansprüche

1. Verfahren zum Verbinden eines elektrischen Leiters (18) mit einem elektrischen Kontaktteil (16), wobei das Kontaktteil (16) verformbare Schenkel (26) aufweist und die Schenkel (26) mittels eines Biegestempels (12) so verformt werden, dass sie den Leiter (18) mit dem Kontaktteil (16) kraftschlüssig verpressen, wobei auf das Kontaktteil (16) dergestalt eingewirkt wird, dass zumindest die Schenkel (26) stoffschlüssig miteinander verbunden werden, wobei ein Laserstrahl (22) die stoffschlüssigen Verbindung bewirkt, **dadurch gekennzeichnet**, die Einwirkung welche die stoffschlüssige. Verbindung bewirkt, über zumindest eine Öffnung (14) im Biegestempel (12) erfolgt und der Laserstrahl (22) durch die Öffnung (14) senkrecht zu der Quererstreckungsrichtung des Kontaktteils (16) eingestrahlt wird.

2. Verfahren nach Anspruch 1,
**dadurch gekennzeichnet, dass**
über Ausnehmungen (36) an den Kanten (38) der Schenkel (26) des Kontaktteils (16) auf den Leiter (18) dergestalt eingewirkt wird, dass eine stoffschlüssige Verbindung zwischen Komponenten (28) des Leiters (18) und/oder zwischen Leiter (18) und einem oder beiden Schenkeln (26) des Kontaktteils (16) hergestellt wird.

3. Verfahren nach Anspruch 1 oder 2,
**dadurch gekennzeichnet, dass**
der Bereich (30), auf welchen der Laserstrahl (22) einwirkt, für zumindest eine Ausnehmung (36) eine größere Fläche als die Ausnehmung (36) aufweist, wobei die Fläche senkrecht zur Strahlrichtung des Laserstrahls (22) beim Auftreffen auf den Bereich (30) zu messen ist.

4. Verfahren nach Anspruch 2 oder 3,
**dadurch gekennzeichnet, dass**
Größen gemessen werden, welche das Einwirken des Laserstrahls (22) charakterisieren, um ein Maß für die Qualität der stoffschlüssigen Verbindung zu erhalten.

5. Verfahren nach Anspruch 4,
**dadurch gekennzeichnet, dass**
die gemessenen Größen eine Schweißdauer und/oder eine eingestrahlte Intensität des Laserstrahls (22) und/oder diejenige Wellenlänge Strahlung mit der höchsten Strahlungsleistung ist, die der Bereich (30) aussendet, auf welchen der Laserstrahl (22) einwirkt.

6. Verfahren nach einem der vorhergehenden Ansprüche,
**dadurch gekennzeichnet, dass**
das stoffschlüssige Verbinden erfolgt, nachdem mittels des Biegestempels (12) eine vorgegebene Sollverformung der Schenkel (26) erzielt ist.

7. Verfahren nach einem der vorhergehenden Ansprüche,
**dadurch gekennzeichnet, dass**
für ein Kontaktteil (16) mit einer Längs- und einer Quererstreckung das stoffschlüssige Verbinden zumindest in einem bezüglich der Längserstreckung mittigen Teilbereich (30) erfolgt.

8. Vorrichtung mit einem Biegestempel (12) zum Verbinden eines elektrischen Leiters (18) mit einem elektrischen Kontaktteil (16), wobei das Kontaktteil (16) verformbare Schenkel (26) aufweist und der Biegestempel (12) dazu ausgebildet ist, die Schenkel (26) so zu verformen, dass sie den Leiter (18) mit dem Kontaktteil (16) kraftschlüssig verpressen, wobei die Vorrichtung weiterhin ein Laserschweißgerät (20) umfasst, wobei das Laserschweißgerät (20) dazu ausgebildet ist, auf das Kontaktteil (16) dergestalt einzuwirken, dass zumindest die Schenkel (26) stoffschlüssig miteinander verbunden werden, wobei der Biegestempel (12) eine Biegeseite (34) aufweist, **dadurch gekennzeichnet, dass** der Biegestempel (12) eine Öffnung (14) aufweist, wobei durch die Öffnung (14) ein von dem Laserschweißgerät (20) ausgesandter Schweißlaserstrahl (22) in einen von der Biegeseite (34) begrenzten Raum (32) einstrahlbar ist,
wobei
die Öffnung (14) senkrecht zu der Quererstreckungsrichtung des Kontaktteils (16) orientiert ist.

9. Vorrichtung nach Anspruch 8,
**dadurch gekennzeichnet, dass**
die Öffnung (14) in der Biegeseite (34) vorliegt.

10. Vorrichtung nach Anspruch 8,
**gekennzeichnet durch**
eine Positioniereinrichtung, die dazu ausgebildet ist, das Laserschweißgerät (20) und/oder das Kontaktteil (16), dessen Schenkel (26) an ihren Kanten (38) Ausnehmungen (36) aufweisen, so zu positionieren, dass ein von dem Laserschweißgerät (20) ausgesandter Schweißlaserstrahl (22) am Ort wenigstens einer Ausnehmung (36) auftrifft.

## Claims

1. Method for connecting an electrical conductor (18) to an electrical contact part (16), said contact part (16) comprising deformable legs (26) and the legs (26) being deformed by means of a bending die (12) such that they press the conductor (18) together with the contact part (16) in a force-locked manner, the contact part (16) being acted upon to such an extent that at least the legs (26) are integrally bonded together, a laser beam (22) bringing about the integral bond,
**characterised in that** the action which brings about the integral bond takes place by means of at least one opening (14) in the bending die (12) and the laser beam (22) is radiated through the opening (14) perpendicularly to the transverse extension direction of the contact part (16).

2. Method according to claim 1, **characterised in that** the conductor (18) is acted upon on via recesses (36) in the edges (38) of the legs (26) of the contact part (16) to such an extent that an integral bond is established between components (28) of the conductor (18) and/or between the conductor (18) and one or both legs (26) of the contact part (16).

3. Method according to either claim 1 or claim 2, **characterised in that**, the region (30) for at least one recess (36), which region is acted upon by the laser beam (22), has a larger surface area than the recess (36), it being possible to measure the surface area perpendicular to the beam direction of the laser beam (22) when said beam impinges on the region (30).

4. Method according to either claim 2 or claim 3, **characterised in that** variables are measured which characterise the action of the laser beam (22) in order to obtain a measurement of the equality of the integral bond.

5. Method according to claim 4, **characterised in that** the measured variables are a welding time and/or an irradiated intensity of the laser beam (22) and/or the wavelength radiation having the highest radiated power emitted by the region (30) upon which the laser beam (22) acts.

6. Method according to any of the preceding claims, **characterised in that** the integral bond is formed after a predefined target deformation of the legs (26) is achieved by means of the bending die (12).

7. Method according to any of the preceding claims, **characterised in that** a contact part (16) having a longitudinal extension and a transverse extension is integrally bonded at least in one portion (30) which is central in relation to the longitudinal extension.

8. Device comprising a bending die (12) for connecting an electrical conductor (18) to an electrical contact part (16), the contact part (16) comprising deformable legs (26) and said bending die (12) being designed to deform the legs (26) such that said legs press the conductor (18) together with the contact part (16) in a force-locked manner, the device further comprising a laser welding device (20), said laser welding device (20) being configured to act on the contact part (16) to such an extent that at least the legs (26) are integrally bonded together, the bending die (12) having a bending side (34), **characterised in that** the bending die (12) comprises an opening (14), it being possible for a welding laser beam (22) emitted by the laser welding device (20) to be radiated through the opening (14) into a space (32) delimited by the bending side (34), the opening (14) being orientated perpendicularly to the transverse extension direction of the contact part (16).

9. Device according to claim 8, wherein the opening (14) is in the bending side (34).

10. Device according to claim 8, **characterised by** a positioning device, which is configured to position the laser welding device (20) and/or the contact part (16), the legs (26) of which have recesses (36) at their edges (38), so that a welding laser beam (22) emitted by the laser welding device (20) impinges at the site of at least one recess (36).

## Revendications

1. Procédé de connexion d'un conducteur électrique (18) avec une pièce de contact électrique (16), dans lequel la pièce de contact (16) présente des ailes déformables (26) et les ailes (26) sont déformées au moyen d'un poinçon de formage (12) de sorte qu'elles compriment par application de force le conducteur (18) avec la pièce de contact (16), dans lequel la pièce de contact (16) est assez sollicitée pour qu'au moins les ailes (26) soient reliées l'une à l'autre en mode venu de matière, dans lequel un rayon laser (22) effectue la connexion en mode venu de matière,
**caractérisé en ce que** l'intervention qui effectue la connexion en mode venu de matière se fait via au moins une ouverture (14) dans le poinçon de formage (12) et le rayon laser (22) est transmis à travers l'ouverture (14) perpendiculairement à la direction d'extension transversale de la pièce de contact (16).

2. Procédé selon la revendication 1,
**caractérisé en ce que** :
via des cavités (36) sur les arêtes (38) des ailes (26) de la pièce de contact (16), on intervient sur les conducteurs (18) de sorte qu'une connexion venue de matière soit élaborée entre les composants (28) du conducteur (18) et/ou entre le conducteur (18) et une ou les deux ailes (26) de la pièce de contact (16).

3. Procédé selon la revendication 1 ou la revendication 2,
**caractérisé en ce que** :
la zone (30), sur laquelle le rayon laser (22) intervient, présente pour au moins une cavité (36) une surface plus grande que la cavité (36), dans lequel la surface doit être mesurée perpendiculairement à la direction du rayon laser (22) lors de l'impact sur la zone (30).

4. Procédé selon la revendication 2 ou la revendication 3,
**caractérisé en ce que** :
l'on mesure des grandeurs qui caractérisent l'action du rayon laser (22) pour conserver une mesure de la qualité de la connexion venue de matière.

5. Procédé selon la revendication 4,
**caractérisé en ce que** :
les grandeurs mesurées sont la durée de soudage et/ou l'intensité de rayonnement du rayon laser (22) et/ou le rayonnement de longueur d'onde de puissance d'émission la plus élevée qui irradie la zone (30) sur laquelle le rayon laser (22) agit.

6. Procédé selon l'une quelconque des revendications précédentes,
**caractérisé en ce que** :
la connexion venue de matière se fait après qu'une déformation théorique préétablie des ailes (26) a été obtenue au moyen du poinçon de formage (12).

7. Procédé selon l'une quelconque des revendications précédentes,
**caractérisé en ce que** :
la connexion venue de matière pour une pièce de contact (16) avec une extension longitudinale et une extension transversale se fait au moins dans une zone partielle (30) centrale par rapport à l'extension longitudinale.

8. Dispositif équipé d'un poinçon de formage (12) pour connecter un conducteur électrique (18) à une pièce de contact électrique (16), dans lequel la pièce de contact (16) présente des ailes déformables (26) et le poinçon de formage (12) est conçu de manière à déformer les ailes (26) de sorte qu'elles compriment à force le conducteur (18) avec la pièce de contact (16), dans lequel le dispositif comprend en outre un appareil de soudage à laser (20), dans lequel l'appareil de soudage à laser (20) est conçu en sorte d'agir sur la pièce de contact (16) afin qu'au moins les ailes (26) soient reliées l'une à l'autre en mode venu de matière, dans lequel le poinçon de formage (12) présente un côté de formage (34), **caractérisé en ce que** le poinçon de formage (12) présente une ouverture (14), dans lequel un rayon laser de soudage (22) irradié par l'appareil de soudage au laser (20) peut être irradié à travers l'ouverture (14) dans un espace (32) délimité par le côté de formage (34), dans lequel
l'ouverture (14) est orientée perpendiculairement à la direction d'extension transversale de la pièce de contact (16).

9. Dispositif selon la revendication 8,
**caractérisé en ce que** :
l'ouverture (14) se trouve dans le côté de formage (34).

10. Dispositif selon la revendication 8,
**caractérisé par** :
un dispositif de positionnement qui est conçu de façon à positionner l'appareil de soudage à laser (20) et/ou la pièce de contact (16), dont les ailes (26) présentent sur leurs arêtes (38) des cavités (36), en sorte qu'un rayon laser de soudage (22) émis par l'appareil de soudage à laser (20) intervienne à l'emplacement au moins d'une cavité (36).
